# EUROPEAN PATENT APPLICATION

(11) **EP 4 582 704 A1**
(43) Date of publication of application: **09.07.2025**
(21) Application number: 24737291.5
(22) Date of filing: 28.02.2024
(51) Int. Cl.: F16B 25/10

(54) **SCREW FOR FASTENING DIFFERENT MATERIALS**

(30) Priority: 07.11.2023 JP 2023190333
(71) Applicant: Sanshu Co., Ltd., Kasugai-shi, Aichi 486-0839 (JP)
(72) Inventor: TANIGUCHI, Masaki, Kasugai-shi, Aichi 4860839 (JP)
(74) Representative: Haseltine Lake Kempner LLP
(86) International application number: PCT/JP2024/007339
(87) International publication number: WO 2025/099963

(57) **Abstract**

The screw for fastening different materials (1) is configured such that a cross-sectional shape of a sharp head part (20) includes three vertexes, lines connecting the respective vertexes each have a curved shape projecting outward, and ridge parts (21), (22), and (23) formed by connecting vertexes of the sharp head part (20) are helical toward the tip end along the same direction as a helical direction of a screw thread (11) of a main screw part (10).

## Description

### CROSS FIELD

The application is continuation of International Application No. PCT/JP2024/7339, filed on February 28,2024, which claims the benefit of Japanese Patent Application No.2023-190333, filed on November 7, 2023, the entire of each are hereby incorporated by reference.

### TECHNICAL FIELD

The present invention relates to a screw for fastening different materials, the screw being able to melt thermoplastic resin as a base material by heat when being screwed into a predetermined portion of the thermoplastic resin and form a screw thread to be fixed, and fasten a material different from the base material to said base material.

### BACKGROUND OF THE INVENTION

As in a screw disclosed in Patent Literature 1 for example, a screw is known, which includes a tapered sharp head part at a tip end of the threaded portion, wherein a cross-sectional shape of said sharp head part includes three vertexes, lines connecting the respective vertexes each have a curved shape projecting outward, and said sharp head part has an approximately triangular pyramid shape. In the case of such a screw, a base material is heated due to the friction caused by screwing the sharp head part and plastically deformed to form a hole, thereafter the threaded portion forms a screw thread and the screw is threadedly attached to the base material. It has been considered preferable that the sharp head part has the approximately triangular pyramid shape as described above rather than a simple conical shape to plastically deform the base material by heating.

### CITATION LIST

### PATENT LITERATURE

PATENT LITERATURE 1: WO 2010/003901

### SUMMARY OF THE INVENTION

### TECHNICAL PROBLEM

The above-mentioned sharp head part was required to have a prescribed length to generate frictional heat sufficient to plastically deform the base material. However, said sharp head part exists only to plastically deform the base material, and is not involved in fastening to the base material in a state where the screw is fastened to the base material. In recent years in the automobile industry and the like, demand for weight reduction of components is increasing, therefore screws are also desired to be made as lightweight as possible.

Thus, the present invention aims to provide a more improved screw for fastening different materials.

### SOLUTION TO PROBLEM

The present invention is a screw for fastening different materials including: a main screw part in which fastening objects which are made of different materials from each other in a fastened state are positioned, the main screw part having a constant outer diameter and formed with a screw thread on an outer peripheral surface; a sharp head part formed continuously from an edge of the main screw part and diametrically contracting toward a tip end; wherein the fastening objects in the fastened state are not positioned in the sharp head part, a cross-sectional shape of the sharp head part includes three vertexes, lines connecting the respective vertexes each have a curved shape projecting outward, and three ridge parts formed by connecting the respective vertexes on an outer peripheral surface of the sharp head part are helical toward the tip end along the same direction as a helical direction of the screw thread of the main screw part.

In such a configuration, the ridge parts of the sharp head part are not linear but helically curved, a surface area of the sharp head part is larger than conventional ones and frictional heat with the base material is increased. Accordingly, the required length of the sharp head part can be shorter than conventional ones, which contributes to weight reduction of the screw. Note that an inclination angle of the ridge part with respect to an axis (inclination of helix) is preferably about from 5 to 20 degrees. It is hard to show an effect compared to conventional screws when the angle is less than 5 degrees, and there is concern that heating efficiency by friction is degraded when the angle exceeds 20 degrees.

### ADVANTAGEOUS EFFECTS OF INVENTION

The screw for fastening different materials of the present invention can have shorter total length than conventional ones and has an excellent effect to contribute to weight reduction.

### BRIEF DESCRIPTION OF DRAWINGS

Fig. 1 is a perspective view of a screw for fastening different materials according to an example.
Fig. 2 is a side view of the screw for fastening different materials according to the example.
Fig. 3a is a front view of the screw for fastening different materials according to the example.
Fig.3b is a sectional view taken along line A-A in Fig.2.
Fig.3c is a sectional view taken along line B-B in Fig.2.
Fig. 4 is an explanatory diagram illustrating a state where a base material and a material to be fastened are being bonded using the screw for fastening different materials according to the example.
Fig. 5 is an explanatory diagram illustrating a fastened state where the base material and the material to be fastened are bonded using the screw for fastening different materials according to the example.

### DESCRIPTION OF EMBODIMENTS

An embodiment of the present invention will be described according an example. Note that the present invention is not limited to the example described below, and the design can be changed appropriately. For convenience of description, the head part side of the screw for fastening different materials is determined as rear and the tip end side of the screw for fastening different materials as front, however the present invention is not limited thereby.

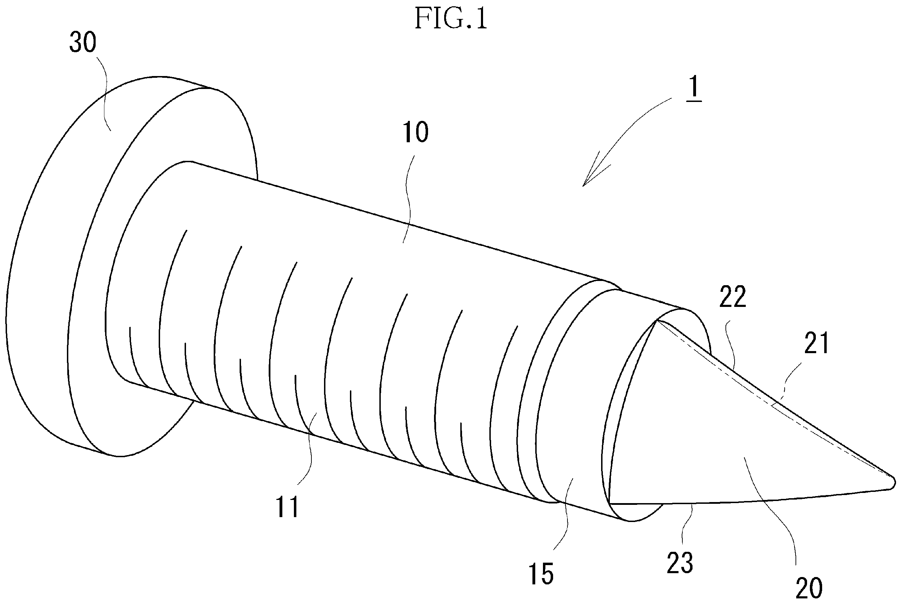

As shown in Fig.1 and the like, a screw for fastening different materials 1 (hereinafter also simply referred to as screw 1) includes: a main screw part 10 having a constant outer diameter and cylindrical shape; a diametrically contracted introduction part 15 formed continuously from the front side (edge side) of the main screw part 10 and having smaller diameter than the main screw part 10; a sharp head part 20 formed continuously from the front side of the introduction part 15 and diametrically contracting toward the tip end. In addition, a screw head part 30 is formed on the rear side of the main screw part 10.

A screw thread 11 is formed on an outer peripheral surface of the main screw part 10. The screw direction of the screw thread 11 in the example is the right-hand screw direction.

The outer diameter of the diametrically contracted introduction part 15 is set approximately equal to the diameter of a valley part of the screw thread 11 of the main screw part 10. Describing in advance, an inner peripheral surface of a hole in a base material W1 bored by the sharp head part 20 is adjusted by the diametrically contracted introduction part 15, the inner peripheral surface of the hole is threaded by the screw thread 11 of the main screw part 10, and the screw 1 is threadedly attached thereto.

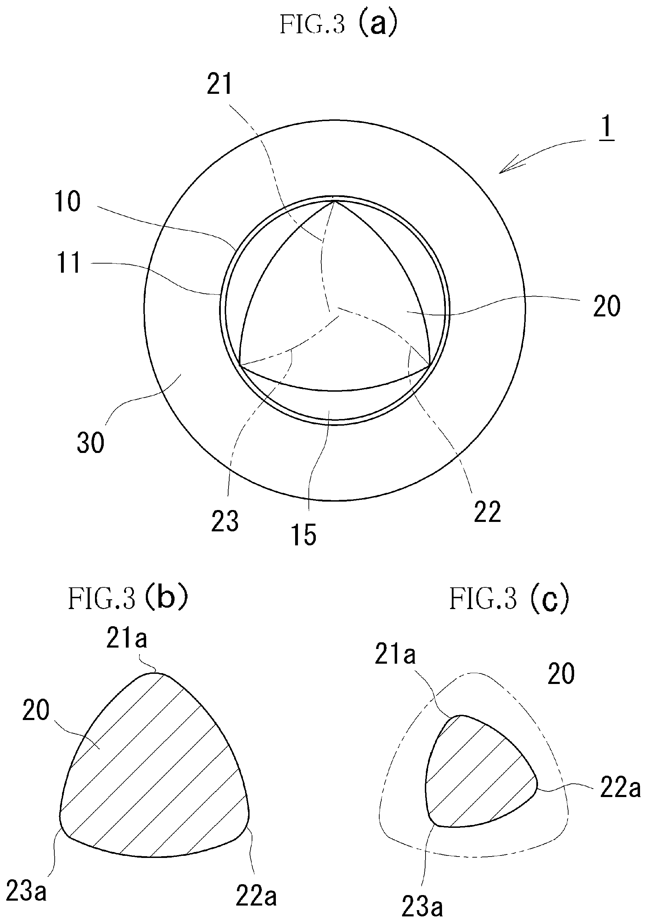

As shown in Fig.3b, the cross-sectional shape of the sharp head part 20 includes three vertexes 21a, 22a, and 23a, and the lines connecting the respective vertexes 21a, 22a, and 23a each have a curved shape projecting outward. Note that the respective vertexes 21a, 22a, and 23a are the farthest points from an axis L along the radiation direction, and do not have sharp shapes having corner parts but have roundly curved edges projecting outward as shown in Fig.3b.

Ridge parts 21, 22, and 23 connecting the vertexes 21a, 22a, and 23a of the sharp head part 20 are helically inclined in right-hand screw direction toward the tip end. This is the same direction as the helical direction of the screw thread 11. That is, comparing Fig.3b showing the cross-sectional shape of the rear end part of the sharp head part 20 with Fig.3c showing the cross-sectional shape of the approximately middle part of the sharp head part 20, the positions of the vertexes 21a, 22a, and 23a are shifted around the axis of the screw 1.

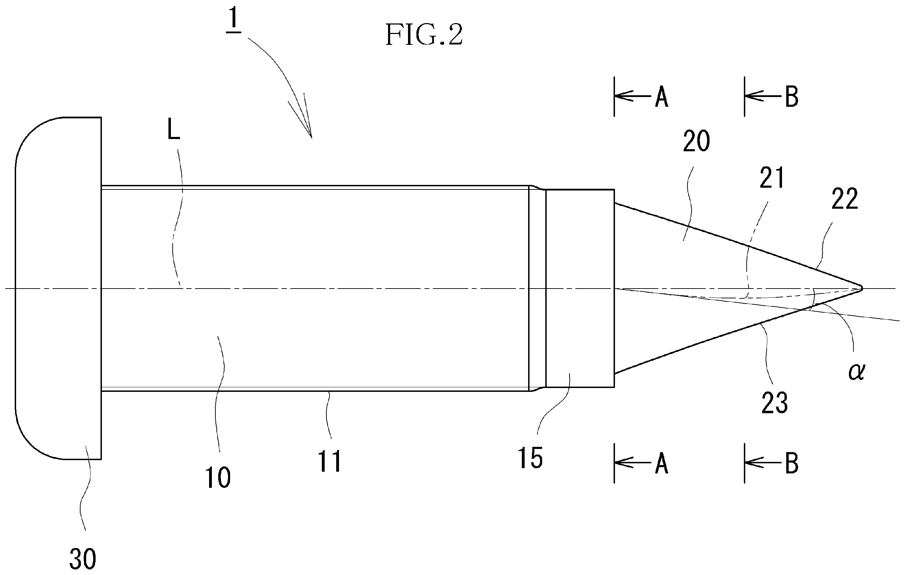

As shown in Fig.2, a shift angle α of the ridge parts 21, 22, and 23 from the axis is 10 degrees in the example.

The ridge parts 21, 22, 23 are shown by two-dot chain lines in the figures to facilitate understanding, however, the outer peripheral surface part is rounded in the vicinity of the vertexes 21a, 22a, and 23a as mentioned above, thus the outer shapes of the ridge parts 21, 22, and 23 are also in curved shapes projecting outward.

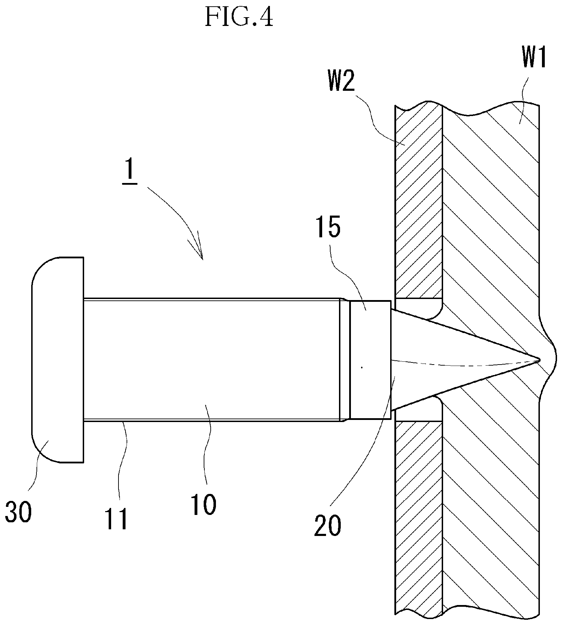

As shown in Fig.4, such a screw 1 is used when bonding a material to be fastened W2 to the base material W1 composed of thermoplastic resin. Since the base material W1 is thermoplastic resin, it is melted by frictional heat generated between the base material W1 and the sharp head part 20 accompanied by rotation of the screw 1 around the axis, and the screw 1 is digging into the base material W1.

When the screw 1 has dug into the base material 1 to some degree, the base material W1 is correspondingly threaded by the screw thread 11 of the main screw part 10 of the screw 1, and the screw 1 is threadedly attached to the base material W1.

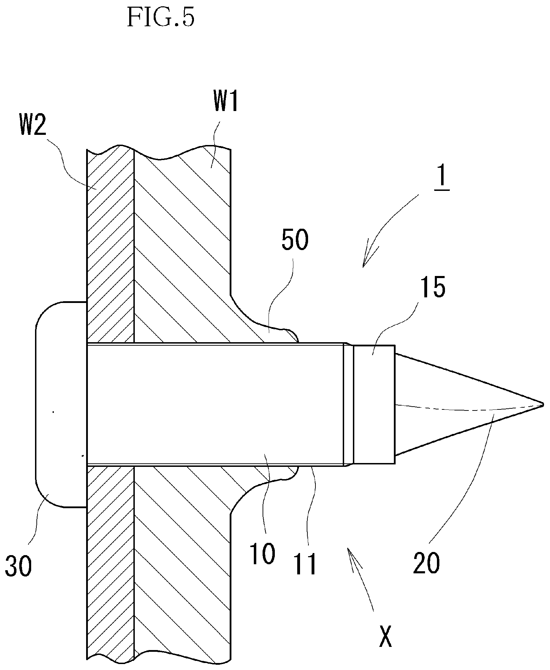

At this time, as shown in Fig.5, in a fastened state X where the screw 1 is threadedly attached to the base material W1, a swelled part 50 is formed around the screw 1 by the melted base material W1 on the back side of the base material W1, which is opposite to the side where the screw 1 has penetrated. An inner peripheral surface of the swelled part 50 is also threaded, which makes the strength further increased where the base material W1 and the screw 1 are therededly attached.

Note that in the fastened state X shown in Fig.5, the base material W1 and the material to be fastened W2 which are to be fastened together are located on the main screw part 10 of the screw 1, and the sharp head part 20 is located on the back side where the sharp head part 20 penetrated from the base material W1. That is, the sharp head part 20 is not involved in fastening of the base material W1 or the material to be fastened W2 in the fastened state X.

In this way, according to the configuration where the ridge parts 21, 22, and 23 of the sharp head part 20 are shifted from the axis to be helical, an outer surface area of the sharp head part 20 becomes larger than conventional screw with ridge parts along the axis, which makes the contact area with the base material W1 increased, and the frictional heat are more largely generated. The larger the generation of the frictional heat, the easier the plastic deformation of the base material W1 by heat. Therefore the sharp head part 20 can have shorter total length than conventional ones. The sharp head part 20 is an unnecessary part after the fastening of the base material is completed. The shorter the total length of said sharp head part 20 is, the more it can contribute to the weight reduction of the screw.

In the example described above, dimension and size of each part can appropriately selected freely. To eliminate a problem where the screw 1 is not threadedly attached in an appropriate manner due to the swelling of the base material W1 to a surface side, it may be configured that the swelling of the base material W1 to the surface side is absorbed by forming a recessed part at the boundary between the main screw part 10 and the screw head part 30, for example.

### REFERENCE SIGNS LIST

1 screw for fastening different materials
10 main screw part
11 screw thread
15 introduction part
20 sharp head part
21,22,23 ridge part
21a,22a,23a vertex
30 screw head part
50 swelled part
W1 base material (fastening object)
W2 material to be fastened (fastening object)
X fastened state
α shift angle

## Claims

1. A screw for fastening different materials comprising:
a main screw part in which fastening objects which are made of different materials from each other in a fastened state are positioned, the main screw part having a constant outer diameter and formed with a screw thread on an outer peripheral surface;
a sharp head part formed continuously from an edge of the main screw part and diametrically contracting toward a tip end; wherein
the fastening objects in the fastened state are not positioned in the sharp head part,
a cross-sectional shape of the sharp head part includes three vertexes, lines connecting the respective vertexes each have a curved shape projecting outward, and
three ridge parts formed by connecting the respective vertexes on an outer peripheral surface of the sharp head part are helical toward the tip end along the same direction as a helical direction of the screw thread of the main screw part.
